# FASCICULE DE BREVET EUROPEEN

(11) **EP 0 470 024 B1**
(45) Date de publication et mention de la délivrance du brevet: **22.01.1997**
(21) Numéro de dépôt: 91440061.9
(22) Date de dépôt: 24.07.1991
(51) Int. Cl.: E04H 15/64, F16B 5/06

(54) **Dispositif de fixation de bâches sur structures démontables, notamment de chapiteaux, halls ou analogues**
Vorrichtung zur Segeltuch-Befestigung an abnehmbaren Bauwerken, insbesondere Markisen, Hallen, usw.
Device for canvas fixing on collapsible structures such as cornices, hangars or similar

(30) Priorité: 03.08.1990 FR 9010102
(43) Date de publication de la demande: 05.02.1992
(73) Titulaire: Etablissements Lucien WALTER Société Anonyme dite,, F-67170 Brumath (FR)
(72) Inventeur: Wibaux, Benoît, F-67450 Lampertheim (FR)
(74) Mandataire: Rhein, Alain

(56) Documents cités:
- EP-A- 0 277 073
- EP-A- 0 312 429
- FR-A- 1 131 350
- US-A- 3 811 454

## Description

L'invention concerne un dispositif de fixation de bâches sur structures démontables, notamment de chapiteaux, halls ou analogues, conforme au préambule de la revendication 1.

Cette invention concerne, en outre, un dispositif de fixation de bâches comprenant un profilé comportant au moins une gorge à profil de section aux dimensions suffisantes pour accueillir au moins deux ralingues correspondant aux bords de bâches conforme à la revendication 2. Finalement, l'invention a trait à un procédé de fixation de bâches sur structures démontables tel que revendiqué dans la revendication de procédé 9.

La présente invention trouvera son application, plus particulièrement, dans le domaine des constructions démontables et, notamment, de chapiteaux comprenant une structure rigide venant à être recouverte par une couverture souple telle que bâche ou analogue.

En réalité, la structure démontable qu'intègrent, généralement les chapiteaux, se compose d'une pluralité de portiques.

En fait et de manière à faciliter la pause et la fixation des bâches composant la couverture, cette structure démontable est, habituellement, constituée à partir de profilés tubulaires, notamment, en aluminium, de section rectangulaire et comportant, plus particulièrement, au niveau des angles, des gorges à profil. Celles-ci sont, souvent, de section semi-circulaire et dimensionnées de manière à pouvoir accueillir la ralingue équipant le bord d'une bâche. A ce propos, il convient de préciser que le terme de ralingue désigne le bourrelet formé, au niveau du bord latéral d'une bâche, par une tige ou un jonc et la toile qui vient à entourer ce dernier tel un ourlet.

Ainsi, l'ouverture latérale des gorges à profil aménagées au niveau des profilés tubulaires est déterminée de telle sorte que cette ralingue ne soit pas en mesure de s'en dégager latéralement, seul le déplacement longitudinal étant autorisé.

Ainsi, une fois la structure montée, il est habituel d'insérer les bords latéraux d'une bâche, dimensionnés, généralement, en fonction de l'écartement de deux portiques juxtaposés, au niveau de l'une des extrémités des gorges à profil correspondant aux profilés tubulaires composant lesdits portiques. Puis on hâle cette bâche au-dessus de cette structure.

A ce stade, il convient de constater que si ce système de fixation des bâches au niveau d'une structure ne pose aucun problème dans le cadre de chapiteaux ou halls de type tunnel, ne comportant un toit qu'à deux pentes, il n'en va pas de même pour les chapiteaux comportant une toiture de type multipente.

En effet, on comprend, au vu de la description qui précède, qu'il est nécessaire, pour fixer une bâche sur une structure, d'enfiler les extrémités des bords latéraux de cette bâche au niveau d'une des extrémités des profilés composant cette structure.

Or, lorsqu'on est en présence de chapiteaux à toiture de type multipente, cette toiture n'est plus formée par une bâche, analogue à une bande mais adaptée, très précisément, à la forme de cette toiture. Cette bâche peut, ainsi, comporter au niveau de sa base une pluralité de côtés équipés de ralingues qu'il convient d'insérer dans les gorges à profil des profilés tubulaires encadrant la structure.

D'ores et déjà, l'on comprend que cette bâche, aux formes particulières et composant la toiture, ne peut plus venir recouvrir une structure préalablement montée telle que décrit, précédemment, mais elle doit être fixée, successivement, aux profilés de la structure en cours de montage de cette dernière.

Il est bien évident que ceci entraîne un certain nombre d'inconvénients au niveau de ce montage par exemple des difficultés de manipulation dues à l'encombrement général de la bâche, augmentation du poids de la structure en cours de montage, etc...

Par ailleurs, on connaît également, par le document EP-A-277.073 un dispositif de fixation tel que décrit dans les préambules des revendications 1 et 2 et qui sert à la fixation du bord d'une nappe tendue applicable notamment à la fixation du bord inférieur d'une toile de tente et abri léger pourvu d'un tel dispositif. En fait, ce dispositif consiste en un profilé comportant, en périphérie, une gorge longitudinale, délimitée au moyen de deux lèvres de largeur différente. Dans cette gorge peut être engagée latéralement, d'une part, une ralingue équipant la bordure de la nappe et, d'autre part, un jonc de verrouillage.

La particularité de ce jonc de verrouillage est liée, d'une part, à son mode de montage dans ladite gorge et, d'autre part, à ses moyens de maintien à l'intérieur de cette dernière.

Ainsi, ce jonc de verrouillage est, une fois verrouillé, en position verticale, à angle droit par rapport à sa position d'introduction dans la gorge. Par ailleurs, il est coincé contre la lèvre inférieure de ladite gorge dans sa partie inférieure arrondie. Quant à la partie supérieure de ce jonc de verrouillage, elle présente un décrochement lui permettant de coopérer avec l'épaulement interne défini par la lèvre supérieure.

Tel que déjà indiqué, le jonc de verrouillage est engagé, tout comme la ralingue, latéralement dans la gorge longitudinale d'un profilé. Cette manière d'opérer oblige l'opérateur à intervenir sur toute la longueur de ce profilé pour s'assurer, tout d'abord, de l'engagement de ladite ralingue dans la gorge, puis pour insérer dans cette dernière et, tronçon après tronçon, le jonc de verrouillage.

De plus, la fixation de deux bâches contiguës sur un même profilé nécessite la réalisation, au niveau de ce dernier, de deux gorges longitudinales distinctes afin de recevoir, chacune, une ralingue disposée en bordure d'une bâche. Par ailleurs, le déverrouillage du jonc de verrouillage nécessite l'utilisation de moyens appropriés, tel qu'un tourne vis. En outre, du fait qu'il faut pouvoir accéder sur toute la longueur de ce jonc de verrouillage, que ce soit pour l'engager dans la gorge ou pour procéder à son déverrouillage, le profilé doit être orienté en conséquence.

L'on observera, en outre, qu'il est connu, au travers du document FR-A-1.131.350 un dispositif de fixation de bâche sous forme d'un profilé comportant une gorge à profil à même d'accueillir deux ralingues correspondant aux bords de deux bâches distinctes. Toutefois, cette gorge à profil comporte une ouverture longitudinale sous forme d'une fente dont la largeur est nécessairement inférieure au diamètre ou à l'épaisseur de l'une quelconque des ralingues précitées, de sorte que chacune de ces dernières doit être engagée longitudinalement dans la gorge à profil, ce qui n'est pas toujours possible ou pose problème tout particulièrement dans des situations telles que celles évoquées plus haut au sujet de chapiteaux à toiture du type multipente.

En conclusion, l'ensemble de ces dispositifs connus entraîne d'énormes contraintes au montage ou au démontage de chapiteaux, halls ou analogues qui en sont équipés. Or, ceci représente un inconvénient de taille dans la mesure où ces opérations sont à effectuer fréquemment.

Ainsi, la présente invention a pour but de remédier aux inconvénients précités en proposant, précisément, un dispositif de fixation de bâche sur structure démontable, qui, d'une part, autorise un montage préalable de cette structure tout en préservant cette liaison des bâches au niveau des profilés tubulaires au travers de la combinaison ; gorge à profilé - ralingue ; et, ce, quelque soit la forme de la bâche composant la toiture amovible et, d'autre part, facilite, précisément, cette liaison en la rendant plus aisée et dans tous les cas plus rapide ceci afin de rendre les opérations de montage et de démontage plus commodes.

Ainsi, l'invention concerne un dispositif de fixation de bâches sur structures démontables, notamment de chapiteaux, halls ou analogues et composés de profilés tubulaires comportant au moins une gorge à profil de section aux dimensions suffisantes pour accueillir au moins une ralingue correspondant à un bord d'une bâche et un jonc de verrouillage, ladite gorge à profil comportant, en outre, une ouverture latérale permettant l'engagement latéral de la ralingue correspondant à une bâche tout en interdisant le retrait de cette ralingue, latéralement, après engagement longitudinal du jonc de verrouillage, caractérisé par le fait que ledit jonc de verrouillage a une forme cylindrique qui présente une section transversale circulaire dont le diamètre est supérieure à celle de la ralingue pour empêcher son dégagement latéral de la gorge à profil au travers de l'ouverture latérale de largeur diminuée par la surépaisseur procurée par la bâche associée à la ralingue.

L'invention concerne, en outre, un dispositif de fixation de bâches sur structures démontables notamment de chapiteaux, halls ou analogues et composées de profilés tubulaires comprenant un profilé comportant au moins une gorge à profil de section aux dimensions suffisantes pour accueillir au moins deux ralingues correspondant aux bords de bâches caractérisé par le fait que ladite gorge à profil comporte une ouverture latérale de largeur ajustée à la section d'une ralingue peut en autoriser l'engagement latéral permettant l'engagement latéral d'une des ralingues correspondant à une bâche, tout en interdisant le retrait de cette ralingue, latéralement, après engagement longitudinal de la seconde ralingue correspondant à une autre bâche au travers de la surépaisseur constituée par cette dernière au niveau de cette ouverture latérale.

L'invention a trait, également, à un procédé de fixation de bâches sur structures démontables, notamment de chapiteaux, halls ou analogues et composées de profilés tubulaires comportant au moins une gorge à profil de section aux dimensions suffisantes pour accueillir au moins une ralingue correspondant à un bord d'une bâche et un jonc de verrouillage ou une seconde ralingue correspondant au bord d'une autre bâche, cette gorge à profil comprenant, en outre, une ouverture latérale dans laquelle est engagée, latéralement, ladite ralingue, caractérisé par le fait qu'après engagement latéral de la ralingue, équipant le bord d'une bâche dans une gorge à profil, l'on introduit dans cette dernière le jonc de verrouillage ou la seconde ralingue de l'autre bâche, longitudinalement et depuis une extrémité du profilé tubulaire. Le préambule de la revendication indépendante 9 est aussi connu du document EP-A-277.073.

Les avantages obtenus grâce à cette invention consistent, essentiellement, en ce qu'il est possible d'insérer, latéralement, le bord d'au moins une bâche dans la gorge à profil d'un profilé puis, au-delà de cette opération, immobiliser le bord de cette première bâche dans cette gorge à profil au travers de la ralingue correspondant au bord d'une seconde bâche ou d'un simple jonc, cette seconde ralingue ou le jonc étant inséré longitudinalement dans ladite gorge à profil.

Ainsi, il sera possible, aisément, d'immobiliser une bâche correspondant à la toiture d'un chapiteau, sur une structure prémontrée, au travers, par exemple, d'un simple volant ou de bâches formant, les pans verticaux qui eux peuvent être fixés sur les profilés tubulaires de la manière habituelle.

Par ailleurs et tel que ceci apparaîtra au cours de la description qui va suivre, l'insertion latérale dans la gorge à profil de la ralingue correspondant à une bâche peut s'obtenir automatiquement sous l'engagement longitudinal de la seconde ralingue ou un jonc et, ce, à la manière d'une fermeture à glissière. Il en découle, bien évidemment, une facilité considérable du montage de ce type de chapiteaux.

De plus et bien qu'il ait été fait référence, ci-dessus, au problème de la fixation d'une bâche de toiture à pentes multiples sur une structure prémontée, on remarquera que la présente invention résout, également, le problème de la création d'ouverture d'accès au niveau des parois verticales de ces chapiteaux. En effet, généralement, ces types d'ouverture sont constitués par des découpes aménagées dans les bâches composant les pans verticaux, ces découpes étant par ailleurs, refermées par des volants recouvrant, partiellement, les bords de la découpe précédemment définie. Un système à oeillet dans lequel est enfilé un lacet ou équivalent, permet, ensuite, de fixer de manière amovible, le volant à ladite bâche composant le pan vertical.

Au vu de ce qui précède, on comprend aisément que la conception de bâche à ouverture pour l'accès à l'intérieur du chapiteau correspond à une fabrication spécifique et conduit, de ce fait, à augmenter le coût de revient de ces constructions amovibles. Par ailleurs, le système des oeillets et du laçage est particulièrement peu commode et nécessite, dans tous les cas, un certain temps pour refermer ou ouvrir ce qui constitue, en quelque sorte, la porte d'accès au chapiteau.

Or, c'est précisément, au travers de l'invention suscitée qu'il est possible de remédier à ce problème. En effet, il suffira d'extraire ou, au contraire, d'introduire, un jonc au niveau d'une gorge à profil d'un profilé composant l'un des poteaux de la structure démontable pour qu'il soit possible de libérer ou de fixer à nouveau l'une des bâches formant un pan vertical et, ainsi, de créer ou, au contraire, de supprimer une porte d'accès au chapiteau.

D'autres buts et avantages de la présente invention apparaîtront au cours de la description qui va suivre se rapportant à un mode de réalisation donné à titre indicatif et représenté dans les dessins joints en annexe :
- la figure 1 est une représentation schématisée en perspective d'un chapiteau comportant une structure démontable et présentant une toiture à pentes multiples ;
- la figure 2 est une représentation schématisée et en perspective d'un profilé tubulaire intégrant au moins une gorge à profil dans lequel est insérée une première ralingue d'un bord latéral correspondant à une bâche ;
- la figure 3 est une représentation analogue à la figure 2 comprenant une gorge à profil dans laquelle sont insérées, successivement, deux ralingues correspondant aux bords latéraux de bâches distinctes ;
- la figure 4 est une représentation schématisée, en perspective et partielle d'un chapiteau en cours d'assemblage ;
- la figure 5 est une représentation analogue aux figures 2 et 3, l'une des gorges à profil accueillant une ralingue correspondant au bord latéral d'une bâche et un jonc constituant des moyens de commande d'ouverture et de fermeture du chapiteau.

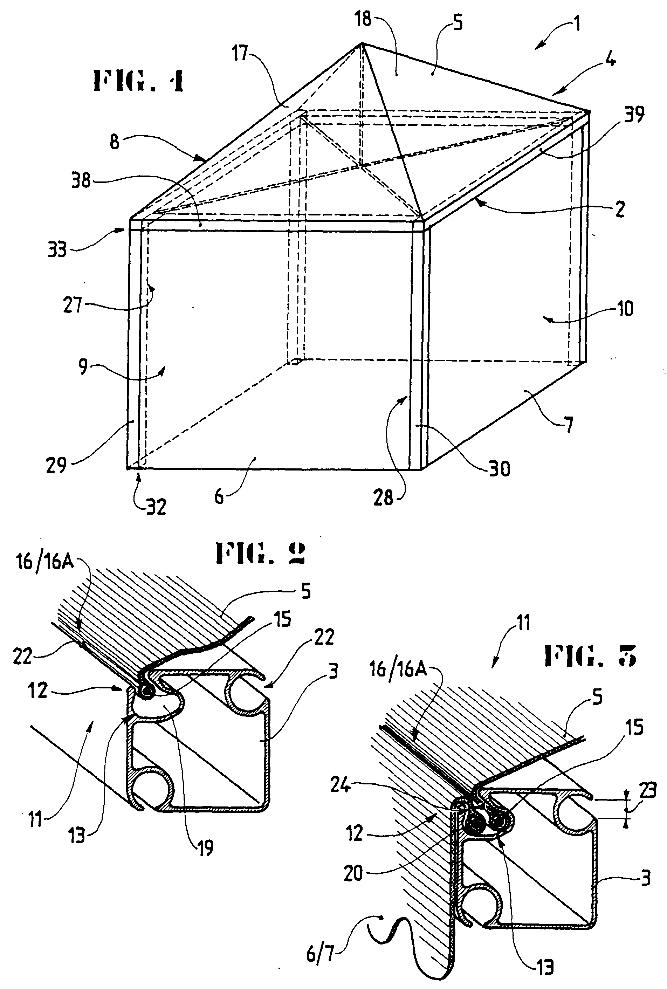

La présente invention trouvera son application, telle que représentée dans la figure 1, dans les chapiteaux 1 ou halls de nature démontable comportant, d'une part, une structure 2, généralement formée par un assemblage de profilés tubulaires 3, par exemple, en aluminium et, d'autre part, une couverture amovible 4 composée par une succession de bâches 5, 6, 7 dont certaines forment la toiture 8 et d'autres les pans verticaux 9, 10.

Plus précisément et tel que ceci apparaît dans les figures 2 à 5, la présente invention concerne un dispositif de fixation 11 des bâches 5 à 7 sur la structure démontable 2.

En fait, plus généralement, les profilés tubulaires 3, composant cette structure démontable 2, sont de section parallélépipédique et comportent au niveau d'au moins un de leurs angles 12 une gorge à profil 13, 14 dans laquelle peut coulisser une ralingue 15 équipant l'un des bords latéraux 16, 16A des bâches 5 à 7.

De plus, au moins une gorge à profil 13, 14 d'un tel profilé tubulaire 3, d'une part, est déterminée de section 19 suffisante pour lui permettre d'accueillir au moins deux ralingues 15, 20 ou une ralingue 15 et un jonc de verrouillage 21. D'autre part, cette gorge à profil 13, 14 présente une ouverture latérale 22 de largeur 23 ajustée à la section d'une ralingue 15 pour en autoriser l'engagement latéral tout en lui interdisant de s'extraire latéralement de ladite gorge à profil 13, 14 en cas de présence de la seconde ralingue 20 ou du jonc de verrouillage 21.

On se reporte, maintenant, plus précisément, aux figures 2 à 4 illustrant le procédé de montage d'un chapiteau intégrant le dispositif de fixation 11 des bâches conformes à l'invention.

Plus particulièrement, il est illustré dans la figure 4, un chapiteau 1 muni d'une bâche 5 constituant la toiture à pentes multiples. Cette bâche 5 est, en fait, disposée sur la structure démontable 2 après assemblage de cette dernière et ses bords latéraux 16, 16A, munis de ralingues 15, sont alors introduits, au travers de l'ouverture latérale 22, dans la gorge à profil 13 des profilés tubulaires 3.

Dans ces mêmes gorges à profil 13 sont, ensuite, engagées, mais cette fois-ci longitudinalement, les ralingues 20 correspondant aux bords latéraux 16 des bâches 6, 7, constituant éventuellement, les pans verticaux 9, 10 dudit chapiteau 1. A noter et tel que ceci est représenté dans la figure 4, de telles bâches 5, 6, peuvent correspondre à de simples volants.

Il peut encore être choisi d'insérer dans ces gorges à profil 13 un simple jonc de verrouillage 21, de manière identique à ce qui est illustré dans la figure 5, pour immobiliser dans ces dites gorges à profil 13 les ralingues 15 correspondant aux bords latéraux 16, 16A de la bâche 5 formant toiture.

Il est important de noter que l'introduction de la seconde ralingue 20 ou du jonc 21 s'effectue, nécessairement, longitudinalement et depuis une extrémité des profilés 3. Par ailleurs, une fois la manoeuvre débutée, on constate qu'au cours de la progression longitudinale de cette seconde ralingue 20 ou de ce jonc 21, la ralingue 15 correspondant à un bord latéral 16, 16A de la bâche 5 vient à s'introduire, tel une fermeture à glissière, automatiquement et latéralement dans la gorge à profil 13.

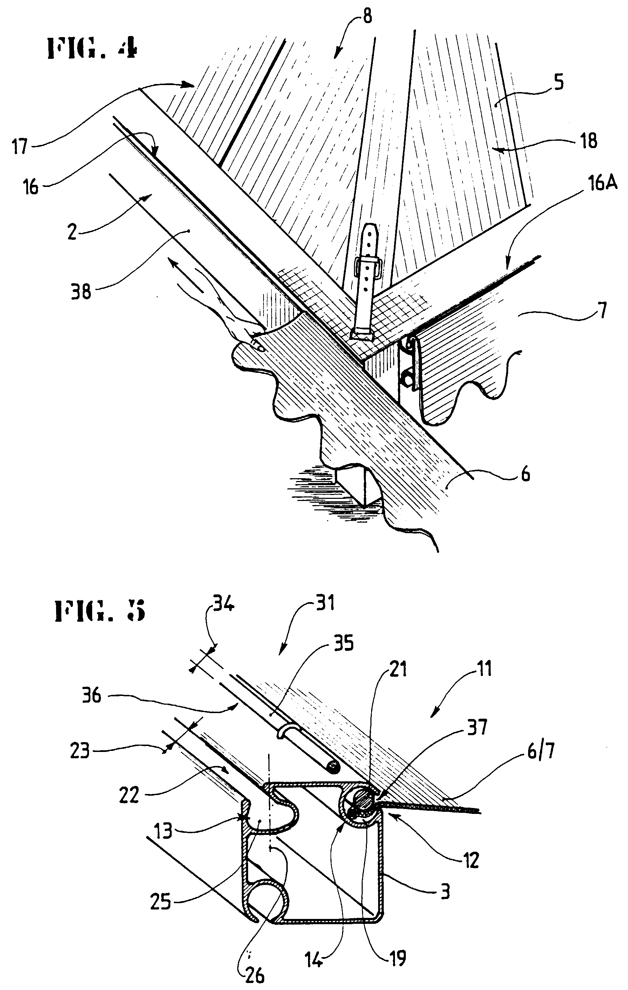

Tel qu'illustré dans la figure 3, la seule surépaisseur 24 que procure la toile d'une bâche 6, 7, au niveau de l'ouverture latérale 22 de la gorge à profil 13 permet d'éviter que l'une des ralingues 15, 20 ne s'échappe, latéralement, de cette gorge à profil 13. Toutefois, en cas d'utilisation d'un simple jonc 21, tel que représenté dans la figure 5, il peut être nécessaire d'éviter que la ralingue 15 correspondant au bord 16 d'une bâche vienne à passer à l'avant du jonc 21 et se présente, ainsi, au droit de l'ouverture latérale 22 de la gorge à profil 13, 14.

Aussi il est préconisé, selon l'invention de choisir un jonc de verrouillage 21 dont la section cylindrique est supérieure à celle de la ralingue 15 de manière à empêcher, précisément, cette dernière à s'échapper au travers de cette ouverture latérale 22 de ladite gorge à profil 13, 14.

Il peut encore être conféré à la gorge à profil 13, tel que représenté dans les figures 2 et 3, une section de forme optimisée et, éventuellement, ellipsoïdale, apte à accueillir au moins deux ralingues 15, 20 juxtaposées ou une ralingue 15 et un jonc 21.

Finalement, on observera qu'étant donné que les bâches 6, 7, composant les pans verticaux 9, 10 d'un chapiteau 1 sont aisément enfilables longitudinalement sur un profilé tubulaire 3, il peut être judicieux de munir de telles bâches 6, 7, de ralingues 20 de diamètre sensiblement supérieur à la ralingue 15, correspondant à la bâche 5 de la toiture. En effet, ceci évite le risque que cette ralingue 15 ne vienne à se présenter au droit de ladite ouverture latérale 22 de la gorge à profil 13, mais aussi afin d'empêcher, en cas d'arrachement ou de traction forte exercée sur ces bâches 6, 7 que leur ralingue 20 se dégage inopinément, et latéralement de la gorge à profil 13.

Finalement, on peut observer que le mode de réalisation illustré dans la figure 5 offre de nouvelles possibilités quant à la création d'accès à l'intérieur du chapiteau 1.

En effet, en assurant la fixation des bords verticaux 27, 28, des bâches 6, 7, au niveau des profilés tubulaires 3 que constituent les poteaux 29, 30 de la structure démontable 2, par l'intermédiaire d'un jonc 21, tel que ceci est préconisé par la présente invention, il est possible, par le simple fait de retirer, longitudinalement, ces joncs 21 des gorges à profil 14, de libérer ces bords verticaux 27, 28 desdites bâches 6, 7 et de réaliser, ainsi, une ouverture d'accès à la partie interne du chapiteau 1. Une telle caractéristique permet, en définitive, d'éviter de concevoir des bâches 6, 7 particulières car comportant une découpe et un volet de recouvrement au système d'ouverture et de fermeture complexe tel que ceci fut évoqué plus haut dans l'exposé de l'état antérieur de la technique.

A noter que, selon l'invention, il est préconisé d'aménager, au niveau de ces poteaux verticaux 29, 30 de la structure démontable 2, des moyens 31 pour commander le retrait ou la mise en place, longitudinalement, du jonc 21 dans une gorge à profil 14 des profilés tubulaires 3 constituant substantiellement, lesdits poteaux 29, 30.

De tels moyens 31 sont constitués selon un mode de réalisation préférentiel par un jonc 21 décrivant une boucle de telle sorte qu'à la partie inférieure 32 des poteaux 29, 30 ce jonc 21 vient à quitter la gorge à profil 14 et à rejoindre, extérieurement, au profilé tubulaire 3, l'extrémité supérieure 33 de ce dernier où il regagne la gorge à profil 14. Ce jonc 21 est, par ailleurs, de section réduite 24 sur sa demi longueur environ.

Ainsi, en commandant le déplacement longitudinal, dans la gorge à profil 14, du jonc 21 en agissant sur son tronçon externe 35, il est possible de présenter, selon le cas, la partie 36 de section importante de ce jonc 21 ou, contrairement, sa partie 37 de section réduite à l'intérieur de ladite gorge à profil 14 conduisant à immobiliser ou, au contraire, à autoriser le dégagement latéral, au travers de l'ouverture 22 correspondant à cette gorge à profil 14, de la ralingue 15 équipant un bord vertical 27, 28 d'une bâche 6, 7.

De manière à faciliter le coulissement des poulies de renvoi autour desquelles ce jonc 21 vient à s'enrouler partiellement, peuvent être disposées à la partie supérieure 33 et à la partie inférieure 32 des poteaux 29, 30.

Ainsi, au travers de tels moyens de commande 31, il est particulièrement aisé de créer des ouvertures d'accès à la partie interne de ce chapiteau 1. Il convient de noter, à ce propos, qu'en raison de leurs caractéristiques, ces moyens 31, fonctionnant de manière semblable à une fermeture à glissière, sont d'usage particulièrement commode et, de ce fait, représentent un progrès non négligeable par rapport à l'état de la technique antérieur.

Finalement, on remarquera que lesdits moyens de commande 31, dans la description qui précède, ont été associés, plus particulièrement, aux poteaux 29, 30 de la structure démontable 2. Toutefois, il est bien évident que ces moyens de commande 31 peuvent également être associés aux différentes traverses 38, 39 équipant cette structure démontable 2, ceci en vue de faciliter la fixation ou, au contraire, le dégagement des bâches 5, 6, 7, au niveau de ces traverses 38, 39.

Au vu de la description qui précède, on constate que l'invention présente de sérieux avantages par rapport à l'état de la technique antérieur en ce qu'elle est à l'origine d'un montage et d'un démontage bien plus facile des chapiteaux 1 et qu'elle contribue, simultanément, à un coût de revient moindre de ces derniers.

## Revendications

1. Dispositif de fixation de bâches (5) sur structures démontables (2), notamment de chapiteaux, halls ou analogues et composées de profilés tubulaires (3) comportant au moins une gorge à profil (13, 14) de section (19) aux dimensions suffisantes pour accueillir au moins une ralingue (15), correspondant à un bord (16) d'une bâche (5), et un jonc de verrouillage (21), ladite gorge à profil (13, 14) comportant, en outre, une ouverture latérale (22) permettant l'engagement latéral de la ralingue (15) correspondant à une bâche (5), tout en interdisant le retrait de cette ralingue (15) latéralement, après engagement longitudinal du jonc de verrouillage, caractérisé par le fait que ledit jonc de verrouillage a une forme cylindrique (21) qui présente une section transversale circulaire dont le diamètre est supérieure à celle de la ralingue (15) pour empêcher son dégagement latéral de la gorge à profil (13, 14) au travers de l'ouverture latérale (22) de largeur (23) diminuée par la surépaisseur (24) procurée par la bâche (5) associée à la ralingue (15).

2. Dispositif de fixation de bâches (5, 6, 7) sur structures démontables (2) notamment de chapiteaux, halls ou analogues et composées de profilés tubulaires (3) comprenant un profilé (3) comportant au moins une gorge à profil (13, 14) de section (19) aux dimensions suffisantes pour accueillir au moins deux ralingues (15 ; 20) correspondant aux bords (16) de bâches (5 ; 6, 7), caractérisé par le fait que ladite gorge à profil (13, 14) comporte une ouverture latérale (22) de largeur (23) ajustée à la section d'une ralingue (15) pour en autoriser l'engagement latéral permettant l'engagement latéral d'une (15) des ralingues correspondant à une bâche (5), tout en interdisant le retrait de cette ralingue (15), latéralement, après engagement longitudinal de la seconde ralingue (20) correspondant à une autre bâche (6 ; 7) au travers de la surépaisseur (24) constituée par cette dernière au niveau de cette ouverture latérale (22).

3. Dispositif de fixation de bâche selon l'une quelconque des revendications 1 et 2, caractérisé par le fait que le jonc de verrouillage (21) ou la ralingue (20) introduit longitudinalement dans une gorge à profil (13, 14) suite à l'engagement latéral de la ralingue (15) correspondant au bord (16) d'une bâche (5), présente un diamètre accru par rapport à ladite ralingue (15).

4. Dispositif de fixation de bâche selon l'une quelconque des revendications 1 et 2, caractérisé par le fait que la gorge à profil (13) présente une section de forme ellipsoïdale apte à accueillir au moins la ralingue (15), d'une part, et le jonc de verrouillage (21) ou la ralingue (20), d'autre part.

5. Dispositif de fixation de bâche selon la revendication 1, caractérisé par le fait qu'il comporte, au niveau des profilés tubulaires (3), des moyens (31) pour commander le retrait ou la mise en place, longitudinalement, du jonc de verrouillage (21) dans une gorge à profil(13, 14) en vue de libérer ou d'assurer l'engagement et le maintien de la ralingue (15) d'une bâche (5, 6, 7) dans cette gorge à profil (13, 14).

6. Dispositif de fixation de bâche selon la revendication 5, caractérisé par le fait que les moyens (31) sont constitués par un jonc (21) décrivant une boucle de telle sorte qu'à l'une (32) des extrémités des profilés tubulaires (3), ce jonc (21) vient à quitter la gorge à profil (13, 14) et à rejoindre, extérieurement à ce profilé tubulaire (3), l'autre extrémité (33) de ce dernier où il regagne la gorge à profil (13, 14), ce jonc (21) étant, sur sa demi-longueur environ, de section (24) suffisamment réduite de sorte que si sa partie (37), correspondant à la longueur de section réduite du jonc (21), est engagée longitudinalement, dans la gorge à profil (13, 14), la ralingue (15) de la bâche (5, 6, 7) soit en mesure de se dégager, latéralement, de ladite gorge à profil (13, 14).

7. Dispositif de fixation de bâches selon la revendication 5, caractérisé par le fait que les profilés tubulaires (3) comportent, au niveau de leurs extrémités (32, 33), des poulies de renvoi autour desquelles s'enroule partiellement le jonc (21).

8. Dispositif de fixation de bâches selon l'une quelconque des revendications précédentes, caractérisé par le fait qu'il est appliqué à des chapiteaux comportant une toiture (8) à pentes (17, 18) multiples.

9. Procédé de fixation de bâches (5, 6, 7) sur structures démontables (2), notamment de chapiteaux, halls ou analogues et composées de profilés tubulaires (3) comportant au moins une gorge à profil (13, 14) de section (19) aux dimensions suffisantes pour accueillir au moins une ralingue (15), correspondant à un bord (16) d'une bâche (5) et un jonc de verrouillage (21) ou une seconde ralingue (20) correspondant au bord (16) d'une autre bâche (6, 7), cette gorge à profil (13, 14) comprenant, en outre, une ouverture latérale dans laquelle est engagée, latéralement, ladite ralingue (15), caractérisé par le fait qu'après engagement latéral de la ralingue (15), équipant le bord (16) d'une bâche (5), dans une gorge à profil (13, 14), l'on introduit dans cette dernière le jonc de verrouillage (21) ou la seconde ralingue (20) de l'autre bâche (6, 7) longitudinalement et depuis une extrémité du profilé tubulaire (3).

10. Procédé de fixation de bâche selon la revendication 9, caractérisé par le fait que l'introduction latérale de la ralingue (15) correspondant au bord (16) d'une bâche (5) dans une gorge à profil (13, 14) d'un profilé (3) s'effectue progressivement et sous l'action du déplacement longitudinal du jonc de verrouillage (21) ou de la seconde ralingue (20) à l'intérieur de la gorge à profil (13, 14).

11. Procédé de fixation de bâches selon l'une quelconque des revendications 9 et 10, caractérisé par le fait qu'il est appliqué à une structure démontable, telle qu'un chapiteau, hall ou analogue, comportant un dispositif de fixation de bâches conforme à l'une quelconque des revendications 1 à 8.

## Claims

1. Device for fixing a canvas (5) on collapsible structures (2), such as cornices, hangars or the like, comprised of tubular profile bars (3) including at least one profile groove (13, 14) with a cross-section (19) of sufficient size to receive at least one rope (15) corresponding to an edge (16) of a canvas (5) and a locking strip (21), said profile groove (13, 14) including, in addition, a side opening (22) allowing to sidely insert the rope (15) corresponding to a canvas (5) while impeding this rope (15) from being sidely withdrawn after sidely inserting the locking strip, characterized in that said locking strip (21) has a cylindrical shape which has a circular cross-section the diameter of which is larger than that of the rope (15) in order to impede same from sidely getting out of the profile groove (13, 14) through the side opening (22) of a width (23) reduced by the extra thickness (24) provided by the canvas (5) associated with the rope (15).

2. Device for fixing canvases (5, 6, 7) on collapsible structures (2), such as cornices, hangars or the like, comprised of tubular profile bars (3), comprising a profile bar (3) including at least one profile groove (13, 14) with a cross-section (19) of sufficient size to receive at least two ropes (15; 20) corresponding to the edges (16) of canvases (5; 6, 7), characterized in that said profile groove (13, 14) includes a side opening (22), of a width (23) fitting the cross-section of a rope (15) in order to authorize same to be sidely inserted, allowing to sidely insert one rope (15) corresponding to a canvas (5) while impeding that rope (15) from being sidely withdrawn, after the second rope (20) corresponding to another canvas (6; 7) has been sidely inserted, through the extra thickness (24) formed by this latter at the level of this side opening (22).

3. Device for fixing a canvas according to any of claims 1 and 2, characterized in that the locking strip (21) or the rope (20) longitudinally inserted in a profile groove (13, 14) following the lateral insertion of the rope (15) corresponding to the edge (16) of a canvas (5) has an increased diameter with respect to said rope (15).

4. Device for fixing a canvas according to any of claims 1 and 2, characterized in that the profile groove (13) has an ellipsoidally shaped cross-section capable of receiving at least the rope (15), on the one hand, and the locking strip (21) or the rope (20), on the other hand.

5. Device for fixing a canvas according to claim 1, characterized in that it includes, at the level of the tubular profile bars (3), means (31) for controlling the longitudinal withdrawal or placing of the locking strip (21) in a profile groove (13, 14) with a view to release or to ensure the insertion or the holding of the rope (15) of a canvas (5, 6, 7) in this profile groove (13, 14).

6. Device for fixing a canvas according to claim 5, characterized in that the means (31) are formed by a strip (21) so describing a loop that at one end (32) of the tubular profile bars (3) this strip (21) leaves the profile groove (13, 14) and joins, outside this tubular profile bar (3), the other end (33) of this latter where it joins anew the profile groove (13, 14), this strip (21) having, over about half its length, a sufficiently reduced cross-section (24), so that when its portion (37), corresponding to the length with reduced cross-section of the strip (21), is longitudinally inserted in the profile groove (13, 14), the rope (15) of the canvas (5) be capable of sidely getting out of said profile groove (13, 14).

7. Device for fixing a canvas according to claim 5, characterized in that the tubular profile bars (3) include, at the level of their ends (32, 33), guide pulleys about which partly winds up the strip (21).

8. Device for fixing a canvas according to any of the preceding claims, characterized in that it is applied to cornices including a roof (8) with multiple slopes (17, 18).

9. Method for fixing a canvas (5, 6, 7) on collapsible structures (2), such as cornices, hangars or the like, comprised of tubular profile bars (3) including at least one profile groove (13, 14) with a cross-section (19) of sufficient size to receive at least one rope (15) corresponding to an edge (16) of a canvas (5) and a locking strip (21) or a second rope (20) corresponding to the edge (16) of another canvas (6, 7), said profile groove (13, 14) including, in addition, a side opening (22) into which is sidely inserted said rope (15), characterized in that after the rope (15) the edge (16) of a canvas (5) is provided with has been sidely inserted into a profile groove (13, 14) the locking strip (21) or the second rope (20) of the other canvas (6, 7) is longitudinally inserted into this latter from one end of the tubular profile bar (3).

10. Method for fixing a canvas according to claim 9, characterized in that the lateral insertion of the rope (15) corresponding to the edge (16) of a canvas (5) into a profile groove (13, 14) of a profile bar (3) progressively occurs under the action of the longitudinal displacement of the locking strip (21) or the second rope (20) inside the profile groove (13, 14).

11. Method for fixing a canvas according to any of claims 9 and 10, characterized in that it is applied to a collapsible structure, such as a cornice, hangar or the like, including a device for fixing a canvas according to any of claims 1 to 8.

## Patentansprüche

1. Vorrichtung zum Befestigen von Segeltüchern (5) an abnehmbare Bauwerke (2), wie Markisen, Hallen und dergleichen, die aus rohrförmigen Profileisen (3) bestehen, die wenigstens eine Profilnute (13, 14) mit einem Querschnitt (19) ausreichender Abmessungen zum Aufnehmen von wenigstens einem, einem Rand (16) eines Segeltuches (5) entsprechenden Liek (15) und einer Sperrleiste (21) umfassen, wobei die genannte Profilnute (13, 14) außerdem eine seitliche Öffnung (22) umfaßt, die die seitliche Einführung des einem Segeltuch (5) entsprechenden Lieks (15) erlaubt, während sie das seitliche Herausziehen dieses Lieks (15) nach der Längseinführung der Sperrleiste verhindert, dadurch gekennzeichnet, daß die genannte Sperrleiste (21) eine zylindrische Form hat, die einen kreisförmigen Querschnitt aufweist, dessen Durchmesser größer ist als das Liek (15), um dessen seitliche Herausschieben aus der Profilnute (13, 14) durch die seitliche Öffnung (22) einer durch die vom mit dem Liek (15) verbundenen Segeltuch (5) verliehene Überdicke (24) verminderten Breite (23) hindurch zu vermeiden.

2. Vorrichtung zum Befestigen von Segeltüchern (5, 6, 7) an abnehmbare Bauwerke (2), wie Markisen, Hallen und dergleichen, die aus rohrförmigen Profileisen (3) bestehen, die ein Profileisen (3) umfaßt, das wenigstens eine Profilnute (13, 14) mit einem Querschnitt (19) ausreichender Abmessungen zum Auffangen von wenigstens zwei den Rändern (16) von Segeltüchern entsprechenden (5; 6, 7) Lieken (15; 20) umfaßt, dadurch gekennzeichnet, daß die genannte Profilnute (13, 14) eine seitliche Öffnung (22) einer dem Querschnitt eines Lieks (15) angepaßten Breite (23), um die seitliche Einführung desselben zu erlauben, umfaßt, die die seitliche Einführung eines einem Segeltuch (5) entsprechenden Lieks (15) erlaubt, während sie das Herausziehen dieses Lieks (15) nach der seitlichen Einführung des zweiten, einem weiteren Segeltuch (6; 7) entsprechenden Lieks (20) durch die von diesem letzten im Bereich dieser seitliche Öffnung (22) gebildete Überdicke (24) vermeidet.

3. Vorrichtung zum Befestigen von Segeltüchern nach irgendeinem der Ansprüche 1 und 2, dadurch gekennzeichnet, daß die Sperrleiste (21) oder das Liek (20), die/das zufolge der seitlichen Einführung des dem Rand (16) eines Segeltuches (5) entsprechenden Lieks (15) der Länge nach in einer Profilnute (13, 14) eingeführt ist, einen bezüglich des genannten Lieks (15) erhöhten Durchmesser aufweist.

4. Vorrichtung zum Befestigen von Segeltüchern nach irgendeinem der Ansprüche 1 und 2, dadurch gekennzeichnet, daß die Profilnute (13) einen ellipsoidförmigen Querschnitt aufweist, der geeignet ist, wenigstens das Liek (15), einerseits, und die Sperrleiste (21) oder das Liek (20), andererseits, aufzunehmen.

5. Vorrichtung zum Befestigen von Segeltüchern nach Anspruch 1, dadurch gekennzeichnet, daß sie im Bereich der rohrförmigen Profileisen (3) Mittel (31) umfaßt, um das Herausziehen oder das Anbringen der Länge nach der Sperrleiste (21) in eine Profilnute (13, 14) zu steuern, um das Liek (15) eines Segeltuches (5, 6, 7) in dieser Profilnute (13, 14) zu lösen oder dessen Einführung und Festhaltung zu sichern.

6. Vorrichtung zum Befestigen von Segeltüchern nach Anspruch 5, dadurch gekennzeichnet, daß die Mittel (31) aus einer Leiste (21) bestehen, die derart eine Schleife beschreibt, daß diese Leiste (21) an einem Ende (32) der rohrförmigen Profileisen (3) die Profilnute (13, 14) verläßt und außerhalb dieses rohrförmigen Profileisens (3) an das andere Ende (33) dieses letzten gelangt, wo sie aufneu in die Profilnute (13, 14) eingreift, wobei diese Leiste (21) über etwa ihre halbe Länge einen ausreichend reduzierten Querschnitt (24) aufweist, sodaß das Liek (15) des Segeltuches (5), wenn ihr Abschnitt (37), der der Länge mit reduziertem Querschnitt der Leiste (21) entspricht, der Länge nach in der Profilnute (13, 14) eingeführt ist, in der Lage ist, seitlich aus der genannten Profilnute (13, 14) herauszuschieben.

7. Vorrichtung zum Befestigen von Segeltüchern nach Anspruch 5, dadurch gekennzeichnet, daß die rohrförmigen Profileisen (3) im Bereich ihrer Enden (32, 33) Umkehrrollen umfassen, um die sich die Leiste (21) zum Teil herumschlingt.

8. Vorrichtung zum Befestigen von Segeltüchern nach irgendeinem der vorgehenden Ansprüche, dadurch gekennzeichnet, daß sie bei Markisen verwendbar ist, die ein Dach (8) mit mehrfachen Neigungen (17, 18) umfassen.

9. Verfahren zum Befestigen von Segeltüchern (5, 6, 7) an abnehmbare Bauwerke (2), wie Markisen, Hallen und dergleichen, die aus rohrförmigen Profileisen (3) bestehen, die wenigstens eine Profilnute (13, 14) mit einem Querschnitt (19) ausreichender Abmessungen zum Aufnehmen von wenigstens einem, einem Rand (16) eines Segeltuches (5) entsprechenden Liek (15) und einer Sperrleiste (21) oder einem zweiten, dem Rand (16) eines weiteren Segeltuches (6, 7) entsprechenden Liek (20) umfassen, wobei die genannte Profilnute (13, 14) außerdem eine seitliche Öffnung (22) umfaßt, in die das genannte Liek (15) seitlich eingeführt wird, dadurch gekennzeichnet, daß nachdem das Liek (15), mit dem der Rand (16) eines Segeltuches (5) versehen ist, seitlich in einer Profilnute (13, 14) eingeführt worden ist, die Sperrleiste (21) oder das zweite Liek (20) des weiteren Segeltuches (6, 7) der Länge nach von einem Ende des rohrförmigen Profileisen (3) her in diese letzte eingeführt wird.

10. Verfahren zum Befestigen von Segeltüchern nach Anspruch 9, dadurch gekennzeichnet, daß das seitliche Einführen des dem Rand (16) eines Segeltuches (5) entsprechenden Lieks (15) in eine Profilnute (13, 14) eines Profileisens (3) allmählich unter der Wirkung der Längsverschiebung der Sperrleiste (21) oder des zweiten Lieks (20) in der Profilnute (13, 14) erfolgt.

11. Verfahren zum Befestigen von Segeltüchern nach irgendeinem der Ansprüche 9 and 10, dadurch gekennzeichnet, daß es bei einem abnehmbaren Bauwerk (2), wie einer Markise, einer Halle oder dergleichen, das eine Vorrichtung zum Befestigen von Segeltüchern nach irgendeinem der Ansprüche 1 bis 8 umfaßt, anwendbar ist.
